# EUROPEAN PATENT APPLICATION

(11) **EP 4 245 139 A1**
(43) Date of publication of application: **20.09.2023**
(21) Application number: 22305299.4
(22) Date of filing: 15.03.2022
(51) Int. Cl.: A01N 1/00, A01N 25/04, A01N 37/12, A01N 43/08, A01N 65/24, A01P 7/04, A01N 25/30

(54) **COMPOSITIONS COMPRISING A BOTANICAL EXTRACT AS INSECTICIDAL AGENT**

(71) Applicant: Centre national de la recherche scientifique, 75016 Paris (FR); Centre de Coopération Internationale en Recherche Agronomique pour le Développement (CIRAD), 75116 Paris (FR); Institut Francais de Recherche pour l'Exploitation de la Mer (IFREMER), 92130 Issy-les-Moulineaux (FR); Université de Guyane, 97337 Cayenne (FR); Institut Pasteur, 75015 Paris (FR); Institut national de recherche pour l'agriculture, l'alimentation et l'environnement, 75007 Paris (FR); Guyane Développement Innovation, 97325 Cayenne (FR)
(72) Inventor: CLERVIL, Emmanuelle, 97300 CAYENNE (FR); HOUËL, Emeline, 97354 RÉMIRE-MONTJOLY (FR); AMUSANT, Nadine, 97354 RÉMIRE-MONTJOLY (FR); DUSFOUR, Isabelle, 34380 CAUSSE DE LA SELLE (FR); DUCHEMIN, Jean-Bernard, 76000 ROUEN (FR); AZAM, Didier, 35310 BRÉAL SOUS MONTFORT (FR); COKE, Maïra, 35000 RENNES (FR)
(74) Representative: Novagraaf Technologies

(57) **Abstract**

The present invention relates to a composition comprising an oil phase comprising notably a botanical extract and an oil in water emulsion comprising said composition. It further relates to the use of such composition and emulsion as an insecticidal agent, in particular a larvicidal agent.

## Description

### FIELD OF INVENTION

The present invention relates to a formulated composition defined as an emulsifiable concentrate (EC), comprising an oil phase comprising notably a botanical extract, and an oil in water emulsion (EW) comprising said composition. It further relates to the use of such composition and emulsion as an insecticidal agent, in particular a larvicidal agent.

### BACKGROUND OF THE INVENTION

*Aedes aegypti* L. (Phylum : Arthropoda ; Class : Insecta ; Order: Diptera ; Family : Culicidae) is an invasive mosquito causing numerous human casualties worldwide as the main vector of several arboviruses, like yellow fever, dengue fever, Zika or chikungunya viruses [1]. Extensive sprawling urbanization and the increase of human population have facilitated geographical expansion of *Ae*. *aegypti* population around the globe due in part to the proliferation of breeding sites [2]. These sites, which can retain stagnant water, are favorable for the development of this anthropophilic species.

In the absence of effective vaccines against these diseases, except in the case of yellow fever, vector control, i.e. the use of various (physical, chemical, biological) methods to control populations of vector insects, therefore remains the only effective line of defense.

The discovery of effective methods of controlling this stage of mosquito development is in particular a relevant angle of approach [3,4].

At present, this vector control strategy is carried out in particular by the use of insecticides, both against the larval stage and the adult stage (imagocidal control) [5-7].

In a context of developing resistance to treatments, and therefore loss of efficacy of products, but also awareness of the unintended effects of some of them, many challenges remain to be overcome [8]. In French Guiana in particular, the various strategies carried out since the 1940s have resulted in the emergence of *Aedes aegypti* populations resistant to many insecticides, including deltamethrin, the only product currently registered for the control of adult mosquitoes, and this while this French overseas territory has to deal with recurrent epidemics of vector-borne infectious diseases [9-11].

With a view to develop effective and selective control products that are not harmful to the environment and the health of users, insecticides of natural origin, and in particular of plant origin, appear as a promising alternative. However, and even if numerous promising results have been obtained, only few of these findings have made it to commercial applications, notably due to both formulation and regulatory issues [12-15].

One of the major technological challenge for the development of larvicidal botanical products is to allow their homogeneous dispersion in water, the natural mosquito-breeding medium, alongside with the increase of field performance through a better persistence of action. To achieve this goal, homogeneous and stable mixtures of active and inert ingredients must be obtained. There is also a search for new, safer and more effective formulations, without using organic solvents exhibiting toxic profiles. Micro- and nanoemulsions in water thus stand in good place. These techniques, which lead to the efficient aqueous suspension or dilution of low water-soluble substances, allow obtaining usable bioactive natural products against mosquito larvae with reduced environmental impact [16-19].

Oil-in-water emulsions (EW) can notably be obtained from emulsifiable concentrates (EC), which are easy-to-use liquid formulations having the ability to spontaneously form emulsions when diluted in water. These formulated substances, which combine active ingredients dissolved in a solvent immiscible with water, alongside with emulsifiers, are however often considered as an old technology. Indeed, most EC rely on the use of petroleum-based solvents such as xylene, kerosene, cyclohexane, mineral oils or C₉-C₁₀ solvents, potentially inflammable, showing toxicity, and known for their non-environmentally and non-user friendly, as well as non-biodegradability properties [20].

However, due the simple manufacture processing, low equipment requirements and convenient usage associated to these products, EC are still of major interest, and developments remain useful. As their main limitation is the use of expensive solvents containing harmful volatile organic chemicals (VOCs), it is necessary to propose improvements, notably on this specific point. Some previously patented technologies relate to the use of natural solvents for pesticide formulations [21,22]. However, these technologies still involve either expensive and complicated processes, or the use of synthetic pesticides.

It is therefore a need to provide bio-based emulsifiable concentrates for use as insecticidal agents, including natural chemical substances as active ingredients, and also improving the performance of the active ingredients in the final composition. The inventors of the present invention have thus developed a formulation for the treatment of the larval sites of the *Aedes aegypti* mosquitoes, based on the promising results previously discovered for *Sextonia rubra* (Mez.) Van der Werff (Lauraceae) wood extract as an insecticidal natural substance [23-27].

### DESCRIPTION OF THE INVENTION

The present invention aims at providing technical solutions allowing to progress towards the economic valorization of natural substances as insecticidal agents, more particularly in the context of a sustainable economy acknowledging environmental issues.

The present invention thus relates to a composition comprising an oil phase comprising:
a) a botanical extract;
b) one or more non-VOC bio-based solvents chosen from the group of esters of aliphatic monocarboxylic acids;
c) two or more bio-based non-ionic surfactants ; and
d) an anti-foaming agent.

Said composition is defined as an emulsifiable concentrate (EC).

It further relates to an oil in water emulsion (EW) comprising such composition.

The present invention also relates to the use of a composition or of an oil in water emulsion as mentioned in the context of the invention as an insecticidal agent, in particular as a larvicidal agent.

The main objective of this invention is to achieve a simple composition, easy to produce and at low cost, effective and easy to use in an aqueous medium, respectful of the environment and non-toxic for users. In particular, this composition must be suitable for the use of lipophilic botanical extracts as active ingredients in such aqueous media.

One of the objectives of is thus the development of an insecticidal composition containing at least 98% of ingredients (active ingredient, solvent and emulsifying system) of natural origin or derived from renewable raw materials.

Another object of the present invention is to provide a stable and efficient composition capable of enhancing the performance (efficacy as well as selectivity towards non-target organisms) of the active ingredients in the final insecticidal agent, in the EC or EW form.

### Composition according to the invention

As mentioned, the invention relates to a composition comprising an oil phase comprising:
a) a botanical extract;
b) one or more non-VOC bio-based solvents chosen from the group of esters of aliphatic monocarboxylic acids;
c) two or more bio-based non-ionic surfactants ; and
d) an anti-foaming agent.

"Emulsifiable concentrate" (EC), as defined herein, are formulated by dissolving the active ingredients in a suitable solvent, which may also contain surfactants, selected upon their ability to emulsify the solvent system, including the active ingredient, into water. The EC may also contain other additives, such as anti-foaming agents. Emulsifiable concentrates are simple to manufacture, with a good chemical stability and a high level of active ingredients, leading to a high biological activity. As the active ingredients are usually hydrophobic or lipophilic, EC are particularly suitable for botanical active substances. In particular, emusifiables concentrates (EC), such as the composition of the invention, spontaneously form stable and homogeneous emulsions when mixed with water, and in particular stable and homogeneous microemulsions when added to distilled water.

### Botanical extract

As mentioned above, the composition according to the invention comprises a botanical extract.

Said extract is in particular responsible of the insecticidal activity of the composition.

By "botanical extract", is meant a chemical substance removed from any part of any plant by physical (e.g. expression, or cold pressing, for the production of essential oils) or chemical (e.g. solvent extraction dissolving some of the plant's components) means. Botanical extracts, or plant extracts, are often complex, multicomponents mixture and can serve as sources of bioactive compounds. A botanical extract can be left in liquid form, or the solvent removed to produce a solid extract.

In particular, the botanical extract is a wood extract, more particularly, a *Sextonia rubra* (Mez.) Van der Werff (Lauraceae) wood extract, which is obtained in the form of a highly viscous to solid extract.

*"Sextonia rubra* extract" within the meaning of the present invention, is a crude extract of *Sextonia rubra* or an extract comprising at least one of its constituents, namely rubrynolide and/or rubrenolide, which can be used as an insecticidal agent within the scope of the present invention.

In particular, said Amazonian sustainable wood extracts are obtained from *S*. *rubra* heartwood. Heartwood, or duramen, is defined as the dead, inner wood of trees. Heartwood may notably be characterized by an increase in extractives content, which are responsible for the wood natural durability. Heartwood is the part of wood that is the most involved in the wood industry.

In particular, *S. rubra* heartwood can be obtained from a variety of sources, including logging wastes, notably sawmilling wood residues. Logging wastes include forestry residues, which are the by-products left over from logging operations (e.g. branches, treetops, sawdust and stumps), and sawmilling wood residues are the by-products generated during mechanical processing of wood as a raw material, e.g. woodchips or sawdust. Sawmilling wood residues is one of the preferred source of *S*. *rubra* heartwood in the present invention, in the context of a biorefinery perspective, and to promote a sustainable approach, by reducing the environmental impact of agro-industrial or timber activities.

Extracts can be obtained by any suitable solvent and method, including solvent extraction methods, or new extraction technologies (supercritical fluid extraction, for example supercritical CO₂, micro-waves, ultrasound, etc.).

The extraction process is not critical, and can be selected by a person skilled in the art as a function of the concentration of metabolites desired, and of the type of expected larvicidal product.

In particular, the composition (EC) according to the invention comprises from 0.01 to 11% by weight, based on the total weight of the composition, of botanical extract, more particularly between 0.5 and 10%, or between 5 and 11% such as for example, 1, 2, 3, 4, 5, 6, 7, 8, 9 or 10%.

As already mentioned, the botanical extract, preferentially the *Sextonia rubra* extract, comprises in particular, rubrenolide and/or rubrynolide.

More particularly, it comprises between 5 and 25% by weight, based on the total weight of the botanical extract, of rubrenolide, even more particularly between 8 and 21% such as 9, 10, 11, 12, 13, 14, 15, 16, 17, 18, 19 or 20%.

More particularly, it comprises between 1 and 30% by weight, based on the total weight of the botanical extract, of rubrynolide, even more particularly between 2 and 26% such as 3, 4, 5, 6, 7, 8, 9, 10, 11, 12, 13, 14, 15, 16, 17, 18, 19, 20, 21, 22, 23, 24 or 25%.

### Non-VOC bio-based solvents

As mentioned above, non-VOC bio-based solvents according to the invention are chosen from the group of esters of aliphatic monocarboxylic acids.

By "VOC" is meant volatile organic compounds.

By "bio-based" is meant a commercial or industrial product that derives wholly or in significant part from materials of biological origin (biomass), notably renewable domestic agricultural materials or forestry materials. Bio-based substances either occur naturally, or are synthetized by processes that use biomass (in particular enzymatic, fermentation and bio-catalysis processes). They are defined in contrast to fossil fuels or petroleum-based products, and therefore exclude materials embedded in geological formations and/or fossilized.

By "solvent" is meant the current meaning for the skilled person, and the above mentioned solvents are natural oil-based solvent that are used for dissolving active ingredients of the composition according to the invention, here botanical extracts.

In particular, natural oil-based solvents are natural oil-based esters, notably esters of aliphatic monocarboxylic acids.

Still in particular, the composition according to the invention comprises from 15 to 30% by weight, based on the total weight of the composition, of esters of aliphatic monocarboxylic acids, more particularly from 20 to 28%, for example 21, 22, 23, 24, or 25, 26 or 27%, in particular 25%.

Still in particular, the esters of aliphatic monocarboxylic acids are chosen from vegetable oils and transesterification products of such oils, in particular alkyl esters, notably methyl or ethyl esters.

The term "vegetable oil" as used herein includes oils from oil producing plants, such as rape oil, soybean oil, palm oil, olive oil, peanut oil, almond oil, sunflower oil, cotton oil, maize oil, linseed oil, coconut oil or castor oil.

In particular, vegetable oils are esters of C₆-C₂₂, preferably C12-C20, fatty acids, particularly C₁₈-fatty acids. Those fatty acid esters are for example esters of unsaturated, e.g. oleic acid (C18 :1), linoleic acid (C18 :2), α-linoleic acid (C18 :3), or saturated, e.g. lauric acid (C12 :0), myristic acid (C14 :0), palmitic acid (C16 :0), stearic acid (C18 :0) or ecosanoic acid (C20 :0) fatty acids.

The composition according to the invention may contain vegetable oils in the form of commercially available oily formulation auxiliaries, e.g. based on rape oil, soybean oil, coco oil or castor oil, like Oleon Nouracid^{™} or Radiacid^{™} products (sunflower oil and soybean oil conjugated fatty acids, topped coco oil fatty acid, dehydrated castor oil fatty acids, Oleon, Ertvelde, Belgium).

By « transesterification » is meant the chemical conversion process in which triglycerides contained in oils are allowed to chemically react with alcohol (e.g. methanol or ethanol) into fatty acids alkyl esters. This process was for example described by Junzo Otera (Chem Rev 1993, 93(4) :1449-1470 ; https://doi.org/10.1021/cr00020a004).

Examples of C₁₀-C₂₂ fatty acid esters are esters and commercially available fatty acid esters products are for example disclosed in Patent US-2005042245-A1 (Taranta et al.).

In the case of the invention described herein, esters of C₁₂-C₂₂ fatty acids and rapeseed oil methyl ester are more particularly contemplated, even more particularly Oleon Radia^{™} 7961 (Oleon, Ertvelde, Belgium).

### Bio-based non-ionic surfactants

As mentioned above, the composition according to the invention comprises two or more bio-based non-ionic surfactants.

Bio-based has the same meaning that as mentioned previously.

By "two or more" in relation with the bio-based non-ionic surfactants is meant, two, three, in particular two bio-based non-ionic surfactants.

In particular, the two or more bio-based non-ionic surfactants are chosen from alkylpolyglucosides and methyl ester alkoxylates.

Alkylpolyglucosides (APG) consist of a hydrophilic saccharide moiety and a lipophilic fatty alkyl chain, and are obtained from carbohydrate raw material, by glycosylation of a reducing sugar with a fatty alcohol. Examples of alkylpolyglucosides which can be used are Simulsol^{™} SL 7 G, or Simulsol^{™} SL 11 W (Seppic, Paris, France).

Methyl ester alkoxylates are in particular natural oil-based methyl ester alkoxylates.

Examples of methyl ester alkoxylates are ethoxylated rapeseed oil methyl ester, for example Sepigreen^{™} C 300, C 200 or C 100 (Seppic, Paris, France). Ethoxylated castor oil methyl ester can also be considered, for example Simulsol^{™} 1292 PHA (Seppic, Paris, France).

In particular, the combination of the two or more bio-based non-ionic surfactants has a HLB value comprised between 8 and 20, with in particular one of the bio-based non-ionic surfactants having a HLB value comprised between 8 and 12 and one of the bio-based non-ionic surfactants having a HLB value comprised between 12 and 20.

More particularly, the HLB of ethoxylated rapeseed oil methyl ester, for example the Sepigreen^{™} C 300, is 11.5, and Sepigreen^{™} C 200 is 8.9, and/or the HLB of alkylpolyglucoside, for example of Simulsol^{™} SL 7 G is 14.2, and Simulsol^{™} SL 11 W is 12.4.

The HLB (Hydrophile-Lipophile-Balance) is the balance of the size and strength of the hydrophilic and lipophilic moieties of a surfactant molecule. This empirical scale, which expresses the amphiphilic nature of emulsifying agents, is one of the indexes in selecting non-ionic surfactants, and was defined by W. C. Griffin (J Cosmet Sci 1949, 1:311-326; http://journal.scconline.org/contents/cc1949/cc001n05.html). The HLB scale ranges from 0 to 20. Surfactants with HLB values in the range of 3 to 6 (e.g. glycerol esters, propylene glycol fatty acid esters, polyglycerol esters, and sorbitol fatty acid esters) are more suitable for use in W/O emulsions, and surfactants with HLB values in the 8 to 20 range tend to form O/W emulsions. HLB can be measured by various methods reviewed by Rabaron et al. (Int J Pharm 1993, 99(1):29-36; https://doi.org/10.1016/0378-5173(93)90319-B).

In particular, the composition comprises one alkylpolyglucoside such as Simulsol^{™} SL 7 G and one ethoxylated rapeseed oil methyl ester such as Sepigreen^{™} C 300.

Still in particular, the composition according to the invention comprises from 55 to 85% by weight, based on the total weight of the composition, of bio-based non-ionic surfactants, more particularly from 60 to 80%, for example 61, 62, 63, 64, 65, 66, 67, 68, 69, 70, 71, 72, 73, 74, 75, 76, 77, 78 or 79%.

### Anti-foaming agent

As mentioned above, the composition according to the invention further comprises an anti-foaming agent.

By "anti-foaming agent" is meant the normal meaning in the art, in particular an additive that acts by reducing the surface tension of a solution or emulsion, and aims to prevent the formation of foam in the composition according to the invention.

For example, the following anti-foaming agents can be cited: hydrophobic organic polymers such as TEGO^{®} Foamex 833 (Evonik Industries AG, Essen, Germany), organic oil-based defoamers such as Airase^{®} 4655 (Evonik Industries AG, Essen, Germany), amphiphilic diols such as acetylenic diol in ethylene glycol, for example Surfynol^{™} 104E (Evonik Industries AG, Essen, Germany

In particular, the composition according to the invention comprises between 2 and 4% by weight, based on the total weight of the composition, of anti-foaming agent, more particularly, 2, 3 or 4%.

### Preparation of the composition

The invention allows the development of a product with insecticidal activity containing an active ingredient derived from renewable plant resources and ingredients derived from green chemistry. In the first step, a concentrate is obtained by mixing the botanical extract with the non-VOC bio-based solvent allowing to effectively dissolve this extract, with regular stirring and optional heating to improve the solubilization of the active ingredient. This process eliminates the need for the use of organic solvents that are potentially toxic to the environment or the user. Furthermore, the surfactants used were also selected for their bio-based origin, and are added to the concentrate by repeating the procedure followed to prepare the concentrate, alongside with the antifoaming agent.

The EC formulations according to the present invention are stable for at least 3 weeks under room temperature conditions (e.g. an average temperature of 25°C), and up to 2 months under room temperature conditions.

### Oil in water emulsion according to the invention

As mentioned above, the present invention also relates to an oil in water emulsion (EW) comprising a composition according to the invention, i.e a composition as described above. The dilution of the emulsifiable concentrate (EC) in water to form the spontaneous oil-in-water emulsion (EW) is preferably performed at ambient temperature with stirring.

In particular, the EW formulation is obtained by mixing 0.01 to 1% w/v of the emulsifiable concentrate (EC) with water, preferably between 0.08% to 0.3%, and more particularly 0.1%, i.e. 1 g of EC with 10 L of water. Such a proportion leads to an easy-to-use product for the final user. Moreover, a low percentage of EC formulation in the oil-in-water emulsion allow reducing the ecotoxicological impact of the EC formulation, in addition to a relevant choice of ingredients.

The EW formulations according to the present invention are stable for at least 5 weeks in ambient conditions (e.g. an average temperature of 26 to 28°C), and up to 2 months under room temperature conditions.

### Insecticidal agent

The composition according to the invention (EC) and the oil in water emulsion (EW) can be used as an insecticidal agent.

By "insecticidal agent" is meant any substance leading to the death of the insects placed in the presence of this substance, in the context of the invention in the presence of the composition (EC) according to the invention, or the oil in water emulsion (EW) according to the invention.

In particular, the insecticidal agent is a larvicidal agent.

By "larvicidal" is meant the same meaning as used above for "insecticidal" except that it targets larvae.

More particularly, the targeted larvae are mosquito larvae.

In particular, the mosquitoes are from the Culicidae family.

In this family, the following examples can be cited: *Aedes aegypti, Culex quinquefasciatus, Anopheles darlingi.*

More particularly, the mosquito strain is of the genus *Aedes* and even more particularly from the species *Aedes aegypti.*

*Aedes aegypti* L. (Phylum : Arthropoda ; Class : Insecta ; Order: Diptera ; Family : Culicidae) is a mosquito that is the main vector of dengue, Zika, chikungunya and yellow fever viruses.

In particular, an effective amount of the composition according to the invention or of the oil in water emulsion is used.

The term "effective amount" within the meaning of the present invention means a dose leading to 100% mortality of the larvae studied.

The mortality is for example evaluated according to the protocol recommended by the World Health Organization (Guidelines for Laboratory and Field Testing of Mosquito Larvicides, WHO / CDS / WHOPES / GCDPP / 2005.13, 2005). Usually, LD₅₀ and LD₉₀ values, i.e. the doses leading to respectively 50 and 90% mortality of the larvae from the studied population, are used to characterize and compare the efficacy of larvicidal agents towards *Ae. aegypti.*

The invention will be further illustrated in view of the following figures and examples.

### Figures

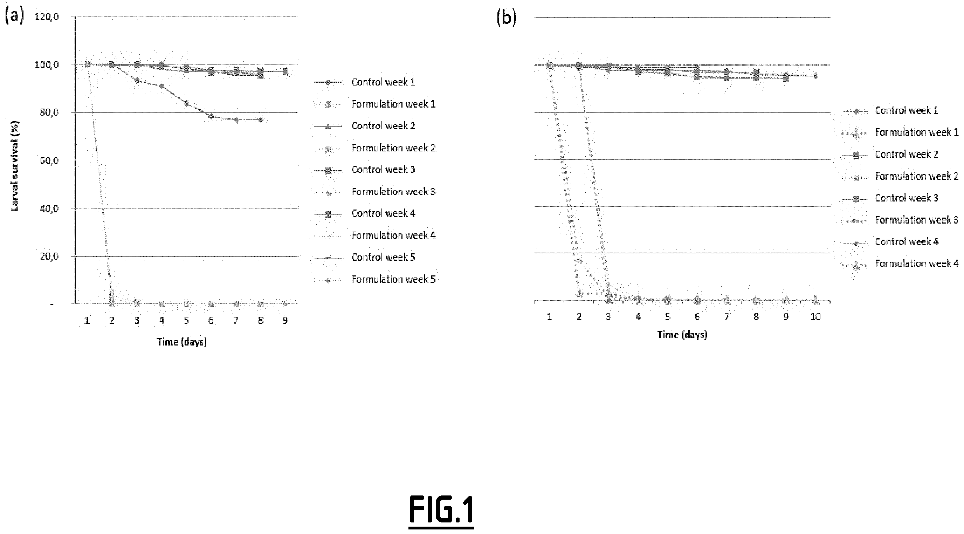

**Figure 1****:** Survival of *Ae. aegypti* mosquito larvae exposed or not to a formulation based on *S*. *rubra* wood extract, under semi-operational test conditions, in the dry season (a) and rainy season (b). Each curve corresponds to a group of 100 larvae (average value of the four replicates). "Control" = untreated water, "Formulation" = EC at a trial dose of 100 µg/ml

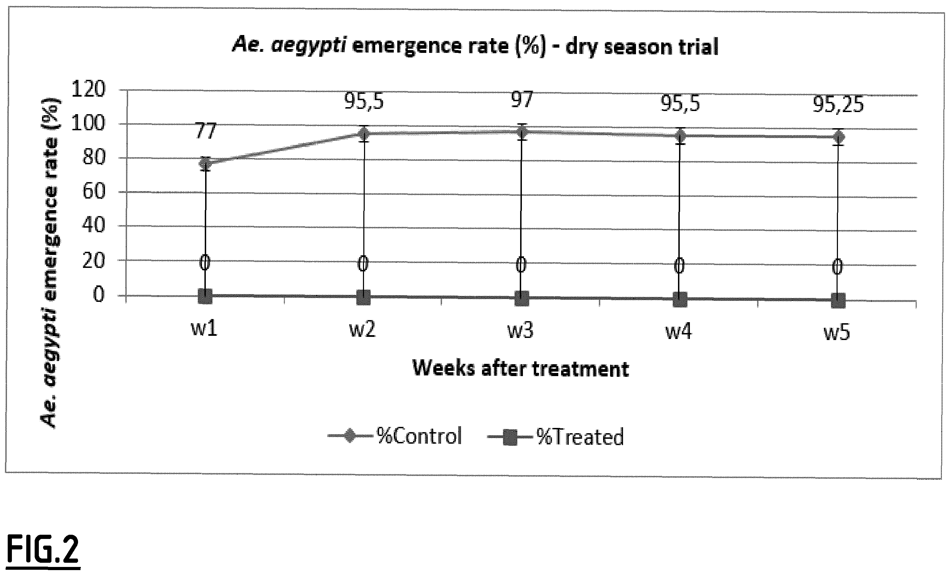

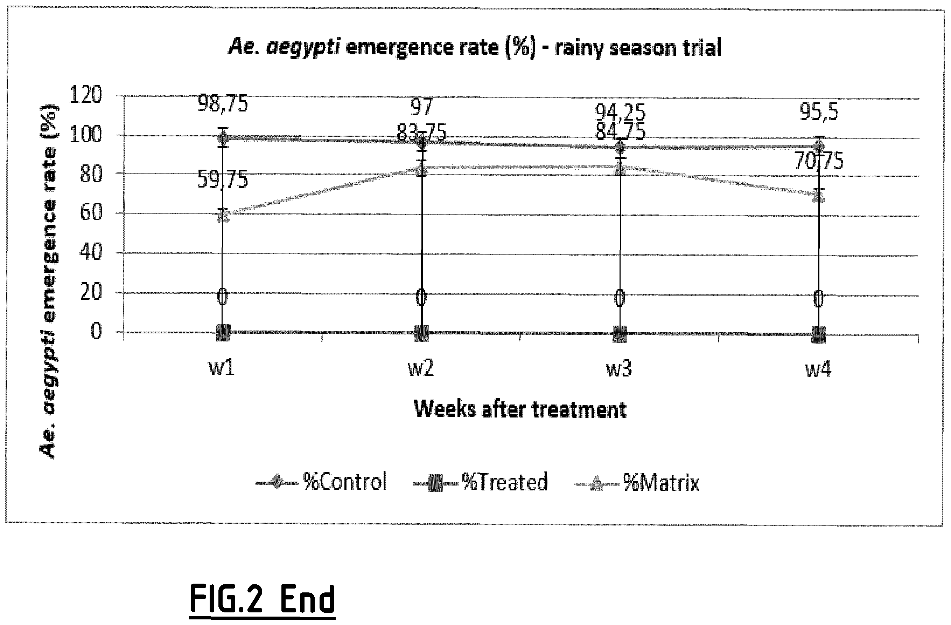

**Figure 2****:** Residual activity of the products tested on the larvae of the mosquito *Ae. aegypti* under semi-operational conditions: formulation, matrix and control, in the dry season and the rainy season. Activity was measured by the emergence rate of adult mosquitoes. "Control" = untreated water, "Formulation" = EC at a trial dose of 100 µg/ml, « Matrix » = EC without botanical extract, 40 g/50 I w/v

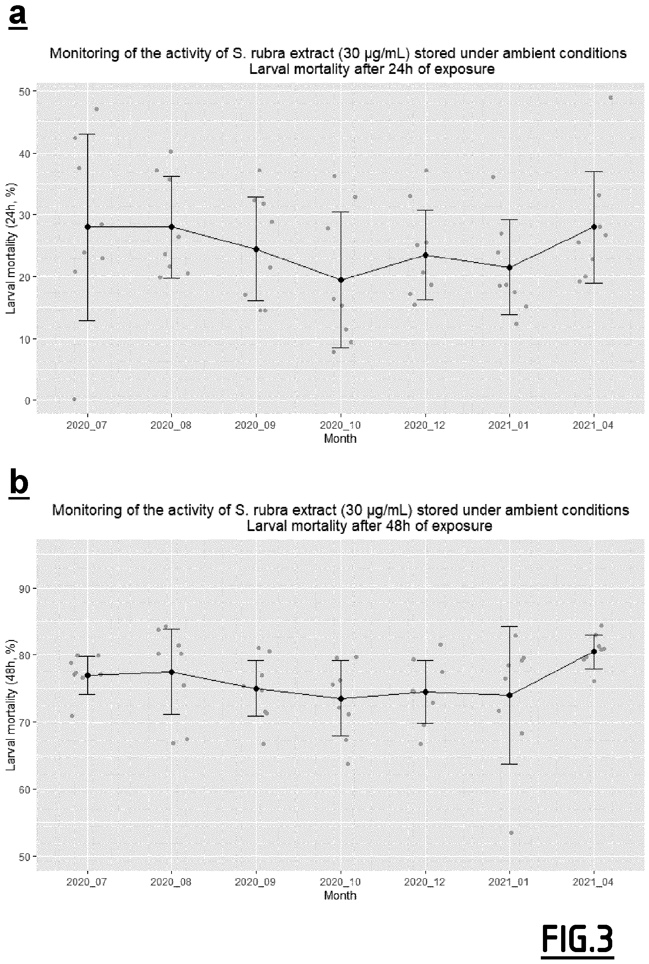

**Figure 3****:** Mortality of *Ae. aegypti* "Cayenne" mosquito larvae exposed to *S*. *rubra* wood extract stored in ambient conditions for 9 months. Test carried out at a dose of 30 µg/ml, with a mortality after 24h of exposure (a) or 48h of exposure (b).

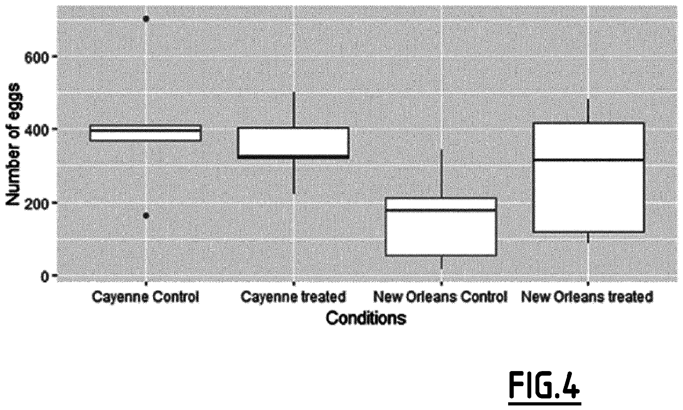

**Figure 4****:** Eggs laid by females of the *Ae. aegypti* New Orleans line and the *Ae. aegypti* Cayenne line according to the treatment of the breeding site applied: "Control" = untreated water, "treated" = 2 µg/ml of *Sextonia rubra* wood extract for the New line Orleans; 70 µg/ml of *Sextonia rubra* wood extract for the Cayenne line.

### Examples

The botanical raw material used consisted of wood waste collected by the sawyer after the sawing of *S*. *rubra* logs to obtain planks for the construction industry. The freshly collected sawdusts were then dried at room temperature (21°C, 65% relative humidity) until an equilibrium humidity level of less than 13% by weight is reached. Prior to solvent extraction, visible bark residues in the sawdust were removed manually or by sieving. In particular, an analysis carried out on the related materials obtained from the sawmills of Montsinéry and Kourou (French Guiana) showed that sawmill related material presented the following characteristics in terms of particle size: particles of size > 500 µm in a range of 60 to 75%, of 21 to 35% of particles of size between 500 µm and 200 µm, and a proportion of less than 6% of fine particles of size <200 µm.

This particle size profile is favorable to the recovery of the resource without cumbersome prior pre-treatment steps, the low proportion of fine particles notably avoiding clogging phenomena in industrial extraction facilities. Grinding the wood waste to a uniform size for all the raw material, for example 500 µm, is also possible for efficient obtainment of the extract. Under the two conditions presented, which are suitable for the preparation of the active raw material serving as the basis for the formulation, a sawdust solvent extraction yield of the order of 3% was obtained.

The ethyl acetate extract of *S*. *rubra* was used as the basis for the preparation of the insecticide formulation. It was obtained following a procedure known in the laboratory, and previously described, using a wood/solvent ratio of 1/20 (w/v) (Rodrigues et al. J Nat Prod 2010. https://doi.org/10.1021 /np1001412; Falkowski et al. Patent WO 2016/046489 A1). The extracts used for the preparation of the formulations were characterized as containing from 8.4 to 20.4% rubrenolide and from 2.0 to 25.6% rubrynolide (% by mass relative to the total extract), values determined by quantitative NMR (Nuclear Magnetic Resonance) assay.

Regarding the preparation of the formulation, the following ingredients were used. These ingredients have been chosen to comply with the standards in force, in this case the Biocide Directive 98/8/EC and the EC Directive 1107/2009 relating to crop treatment products. In particular, ingredients derived from green chemistry were therefore favored during the development of the composition. The final products offered are as follows: Radia^{™} 7961 (methyl ester of rapeseed oil, Oleon, Ertvelde, Belgium); Sepigreen^{™} C 300 (methyl ester of ethoxylated rapeseed oil, Seppic, Paris, France); Simulsol^{™} SL 7 G (alkylpolyglucoside, Seppic, Paris, France); Surfynol^{™} 104E (acetylenic diol in ethylene glycol, Evonik Industries AG, Essen, Germany).

In order to obtain the final formulation, the first step consisted in the preparation of a concentrate, obtained by the gradual addition of the non-volatile green solvent derived from a vegetable oil (Radia^{™} 7961, rapeseed oil methyl ester) with *S*. *rubra* wood extract. The objective is to obtain a liquid and easily manipulated product for the finalization of the composition, the wood extract of *S*. *rubra* appearing in the form of a more or less solid and sticky brown molasses depending on the quality of the wood used. The mixture thus obtained was left in contact at room temperature (23 ± 2°C) for 3 hours with regular manual stirring, then heated in a double-walled water bath for 30 minutes to reach a temperature of approximately 60°C, in maintaining agitation, until the extract has completely dissolved in the solvent. This process was repeated for the realization of the mixture of this concentrate with the rest of the ingredients (surfactants and anti-foaming agent). The final product obtained was an emulsifiable concentrate, the property of which is to spontaneously form microemulsions when added to distilled water.

On the basis of these ingredients, several mixtures have been prepared, including in particular (% by mass):
- from 3.5 to 14% ethyl acetate extract of *S*. *rubra* wood;
- 20 to 25% non-volatile solvent derived from vegetable oil, such as rapeseed oil methyl ester (Radia^{™} 7961);
- from 31.5 to 36.75% of non-ionic surfactant with an HLB value between 8 and 20, of the ethoxylated rapeseed oil methyl ester type, HLB 11.5 (Sepigreen^{™} C 300);
- from 29 to 36.75% of non-ionic surfactant with an HLB value between 8 and 20, of the alkylpolyglucoside type, of HLB 14.2 (Simulsol^{™} SL 7 G)
- from 2 to 3% of amphiphilic diol type anti-foaming agent (acetylenic diol), HLB 4 (Surfynol^{™} 104E)

The 5-day stability of the concentrates and their microemulsions, obtained by dilutions in distilled water ranging from 0.08% to 0.3% in total product, representing an extract content of *S*. *rubra* in the aqueous medium of 100 µg/ml, were then evaluated visually. If in all cases the emulsions obtained retained a homogeneous and transparent appearance throughout the observation period, this first analysis made it possible to determine the most effective mixtures, making it possible to obtain transparent brown concentrates in a stable manner over a period of time of 5 days. In particular, the *S*. *rubra* extract must be used at a concentration ≤ 10% by weight of the total mixture to maintain the brown, transparent and fluid appearance of the concentrate for more than 24 hours and to avoid crystallization of the product.

It has thus been demonstrated that the most optimal formula in terms of appearance (concentrated and diluted liquid, homogeneous, transparent, without the appearance of streaks or insolubles) and concentration of *S*. *rubra* extract was the following (composition in mass percentages):

**Table 1**

| Trade Name/Ingredient | Chemical family | % (w/w) |
|---|---|---|
| Radia 7961 | Rapeseed oil methyl ester | 25,0 |
| Sepigreen C 300 | Ethoxylated rapeseed oil methyl ester | 34,0 |
| Simulsol SL 7 G | Alkylpolyglucosides (APG) | 29,0 |
| Surfynol 104E | Acetylenic diol | 2,0 |
| *Sextonia rubra* | Organic Solvent Wood Extract | 10,0 |

For this formulation, the *S*. *rubra* wood extract used was obtained from related sawmills with the following particle size profile: 74.3 ± 2.9% of particles of size > 500 µm, 21.2 ± 2.1% of particles of size included between 500 and 200 µm, and 4.2 ± 0.6% of particles of size

< 200 µm (0.3% loss during sieving). This extract was also characterized by a composition of 10.5% rubrenolide and 8.9% rubrynolide (% by mass relative to the total extract).

The evaluation of the larvicidal activity of the formulation was carried out on *Aedes aegypti* mosquitoes, and more particularly the "Cayenne" strain. A first generation of these mosquitoes (F0) was collected in the city of Cayenne, French Guiana, maintained at the medical entomology laboratory (Vectopole Amazonien Emile Abonnenc, Institut Pasteur de la Guyane, Cayenne), and the larvae of the F1 generation were used for testing. This natural population of mosquitoes has in particular a strong resistance to pyrethroid type insecticides. Mosquito breeding was carried out at 28 ± 2°C, at an ambient humidity of 80 ± 20% and with a day length of 12:12 h ± 20 min during the year. The eggs were kept dry on blotter strips at insectary temperature. After depositing the strips in water and hatching, the larvae were fed with yeast tablets, and raised until the obtaining of late third- or early fourth-instar larvae to be used for testing the biological activity of products.

For a first characterization, the LD₅₀ and LD₉₀ values, i.e. the doses necessary to obtain a mortality of 50% (LD₅₀) and 90% (LD₉₀) of the mosquito population, were calculated for the wood extract used for the formulation, and for the formulation itself. These measurements were carried out according to the protocol of the World Health Organization, with the necessary adaptations (World Health Organization, Guidelines for laboratory and field testing of mosquito larvicides, 2005). The following values were obtained:

**Table 2: Comparison of the lethal doses (LD) obtained at 24 and 48 hours for the organic solvent wood extract of S. rubra and the formulation against the larvae of the mosquito Ae. aegypti, strain "Cayenne"**

| | LD₅₀ 24h | LD₉₀ 24h | LD₅₀ 48h | LD₉₀ 48h |
|---|---|---|---|---|
| *S*. *rubra* extract | 39.6 µg/ml | 118.2 µg/ml | 18.6 µg/ml | 51.2 µg/ml |
| Formulation | 48.0 µg/ml | 75.1 µg/ml | 9.3 µg/ml | 39.6 µg/ml |

We thus noted a good larvicidal efficacy of the formulation, without loss of activity compared to the raw extract despite its concentration of 10%.

To ensure that this activity was not due to the ingredients used (matrix effect), but to the process of implementing the extract in the formulation, the effect of the latter and of the matrix were compared to a dose of 100 µg/ml according to the same test protocol. The following results were obtained, demonstrating a very weak effect of the matrix on mosquito larvae:

**Table 3: Comparison of mortalities obtained at 24 and 48 hours for the matrix and the formulation against the larvae of the mosquito Ae. aegypti, strain "Cayenne" at a dose of 100 µg/ml**

| | Mortality of mosquito larvae (24h) | Mortality of mosquito larvae (48h) |
|---|---|---|
| Matrix | 9,5% at 100 µg/ml | 14% at 100 µg/ml |
| Formulation | 100% at 100 µg/ml | 100% at 100 µg/ml |

The objective of the development of the formulation being to obtain a larvicidal composition active not only in laboratory conditions (Phase I), but also in the field, it was therefore tested in semi-operational conditions (Phase II). This test was carried out according to the protocol of the World Health Organization, with the necessary adaptations (World Health Organization, Guidelines for laboratory and field testing of mosquito larvicides, 2005), under controlled conditions representative of natural breeding sites. In particular, the formulation and the matrix were tested at a dose corresponding to twice the LD₉₀ of the crude extract at 48 hours, i.e. 2*51.2 µg/ml ≈ 100 µg/ml. The strain of mosquitoes chosen is the wild "Cayenne" strain, so that the test conditions were as close as possible to reality. The tests were carried out on the campus of the Institut Pasteur de la Guyane in Cayenne, using plastic containers with a volume of 50 liters each. The drums were placed under cover, sheltered from direct sunlight and rain, and covered with a mosquito net so as to prevent any oviposition by wild mosquitoes or other insects, as well as debris falling into the environment during of the test. In each test barrel, 4 replicates were deposited at the start of the test 50 g of the formulation based on *S*. *rubra* wood extract (10% extract in the formulation) in a volume of water of 50 liters. The negative control drums were filled with 50 liters of water, and the matrix test drums with 45 g of matrix in 50 liters of water. No other addition of formulation was made during the five weeks of testing. In all cases, the water was left for 24 hours in the barrels before any manipulation to promote the elimination of chlorine, and the level was adjusted regularly throughout the duration of the experiment to compensate for natural evaporation. A group of 100 larvae was initially added to each of the drums, and a new group of 100 larvae was added again after the adult mosquitoes have fully emerged in the negative control drums (between approximately 7 and 10 days). The larvae, used at 3rd-4th instar, were fed with yeast tablets, and the survival of the larvae as well as the emergence of adults was monitored daily. The experiment was carried out for 5 weeks in two different seasons: dry season and rainy season. When the formulation was added to the barrels, a milky appearance was obtained, characteristic of the formation of an emulsion. This was stable over the entire duration of the test.

The results obtained showed larvicidal efficacy of the formulation under semi-operational conditions, with both:
- Rapid larvicidal activity, leading to 100% larval mortality in 2 to 4 days depending on the season, at the test dose of 100 µg/ml (Figure 1)
- A good persistence of the formulation in the medium, with a residual activity maintained during the 5 weeks of tests in the two seasons, leading to zero emergence of adult mosquitoes in the barrels treated with 100 µg/ml of formulation at time t0 (Figure 2).

In addition, excellent stability of the larvicidal activity of the crude extract, stored in ambient conditions in the laboratory (25°C) in an amber bottle, for a period of 9 months, has been shown in parallel. In particular, for this *S*. *rubra* wood extract containing 10.5% rubrenolide and 8.9% rubrynolide (% by mass relative to the total extract), a mortality of *Aedes aegypti* larvae of between 73.5 and 80.5% at 48 hours was observed in laboratory assays over the duration of follow-up at a test dose of 30 µg/ml (Figure 3).

For possible use of the product in real conditions, it must be sufficiently harmless with respect to non-target organisms. Tests were therefore carried out on reference aquatic organisms *(Daphnia magna* Straus (1820), a planktonic crustacean, Class: Branchiopoda, Order: Diplostraca, Family: Daphniidae; *Chironomus riparius* Meigen (1804), Class: insect, Order: Diptera, Family: Chironomidae) as well as on human cell lines. The products were tested at the LD₅₀ of the crude extract at 48 hours (18.6 µg/ml) and at the test dose of the trials in semi-operational conditions (100 µg/ml). The tests were carried out according to the OECD 202 protocol for *D. magna* and the OECD 235 protocol for *C*. *riparius* with adaptations. The following results were obtained:

**Table 4: Ecotoxicity of S. rubra wood extract, matrix and formulation: immobilization percentage of non-target aquatic organisms Daphnia magna and Chironomus riparius after 24h and 48h of exposure to the extract, formulation matrix and full formulation (S. rubra extract emulsifiable concentrate).**

| **Assay on *D. magna*** | Immobilization at 24h(%) | Immobilization at 48h(%) |
|---|---|---|
| Extract (18,6 µg/ml) | 80 | 100 |
| Matrix (18,6 µg/ml) | 0 | 0 |
| Matrix (100 µg/ml) | 0 | 16 |
| Formulation(18.6µg/ml) | 12 | 68 |
| Formulation(100 µg/ml) | 20 | 100 |
| | | |

| **Assay on *C***. ***riparius*** | Immobilization at 24h (%) | Immobilization at 48h (%) |
|---|---|---|
| Extract (18,6 µg/ml) | 72 | 96 |
| Matrix (18,6 µg/ml) | 0 | 12 |
| Matrix (100 µg/ml) | 0 | 12 |
| Formulation (18.6 µg/ml) | 4 | 28 |
| Formulation (100 µg/ml) | 64 | 92 |

We observed:
- Satisfactory safety of the matrix vis-à-vis non-target organisms (a maximum of 16% of animals undergo an effect of the matrix after 48 hours of exposure, to be related to a rate of 4% of immobilization for the water control and 8% for the water/ethanol control). This result demonstrated that the selection of ingredients (solvent, surfactants and anti-foaming agent) in view of their low ecotoxicity was effective.
- A gain in selectivity of the formulation towards the crude extract, with a much lower immobilization rate (68% against 100% for *D. magna,* and 28% against 100% for *C*. *riparius*) at equal dose (18.6 µg/ml) in the case of the formulation in comparison with the extract. This therefore made it possible to reduce the environmental impact or, at the very least, the effects on certain non-target species living in similar environments, without loss of effectiveness against the larvae of the mosquito *Ae. aegypti* (values of LD₅₀ and LD₉₀ of the extract and the formulation of the same order of magnitude).
- A significant impact of the formulation on non-target organisms at the test dose of 100 µg/ml.

Regarding the evaluation of the cytotoxicity of the products, the following results were obtained:

**Table 5: Cytotoxicity of S. rubra wood extract, matrix and formulation**

| Cl₅₀, µg/ml | Liver (HuH7) | Kidney (NCI- H295R) | Colon (Caco2) | Skin (fibroblasts) | Bonemarrow neuroblasts (SHY5YSY) | Umbilical cord (HUVEC) |
|---|---|---|---|---|---|---|
| Matrix | 143 | 87 | 120 | > 250 | > 250 | 214 |
| Formulation | 102 | 94 | 172 | > 250 | 156 | 170 |
| *S. rubra* extract | 32 | 93 | 91 | > 250 | > 250 | 70 |

In view of the values obtained, neither the matrix nor the formulation showed any significant toxicity towards the lines evaluated (IC₅₀ > 100 µg/ml). In addition, using as a reference the measurement of the selectivity index, defined as the ratio of the IC₅₀s measured to the LD₅₀ at 48h against the larvae of *Ae. aegypti,* values all greater than or equal to 10 were obtained, demonstrating in all cases a very good selectivity of the formulation in comparison with the extract.

Finally, the existence of a possible repellent effect of the wood extract within breeding sites was also tested. Indeed, in the case of the existence of such an effect, considering a larviciding treatment of breeding sites with a product derived from *S*. *rubra* would be irrelevant, since the laying would take place in other places. For this validation, carried out in the laboratory, two breeding sites (control, i.e. without any treatment, and treated, i.e. with *S*. *rubra* wood extract) were placed in a cage containing male and female mosquitoes. After a blood meal, the laying behavior of the females was observed by counting the eggs laid in each of the two roosts placed in the cage every 24 hours. This experiment was repeated for 2 *Ae. aegypti* strains (New Orleans, laboratory reference strain, sensitive to insecticides, and Cayenne, wild strain). The extract was tested at a concentration of 2 µg/ml for the reference strain, and 70 µg/ml for the wild strain.

For the two strains, no significant difference was observed between the number of eggs laid in a treated roost and the number of eggs laid in the control roost (i.e. untreated) (Student's comparative test on the New Orleans line: t = -1.2697, df = 7.3768, p-value = 0.2428; Student's comparative test on the Cayenne line: t = 0.54894, df = 6.1733, p-value = 0.6023). The results therefore showed that the wood extracts of *S*. *rubra* present in a breeding site do not have a repellent effect on females seeking to lay eggs.

In conclusion:
- A formulation, in the form of an emulsifiable concentrate, was obtained from the extract of *S*. *rubra* wood, using ingredients derived from green chemistry and compliant with European standards and regulations;
- This formulation has demonstrated activity against mosquito larvae *Ae. aegypti,* in particular of the wild line resistant to insecticides "Cayenne", both in laboratory conditions and in semi-operational conditions in line with reality in the field (immediate toxicity and residual activity);
- This formulation has demonstrated better selectivity towards non-target organisms (aquatic organisms and human cell lines) than crude wood extract of S. *rubra,* its active ingredient;
- The crude wood extract dissolved in water did not cause a repellent effect on females looking for a place to lay eggs, which indicated that the use of the formulation will not specifically cause search by female mosquitoes for alternative, not treated, breeding places.

### BIBLIOGRAPHY

[1] Gloria-Soria A, Kellner DA, Brown JE, Gonzalez-Acosta C, Kamgang B, Lutwama J, Powell JR, 2016. Temporal genetic stability of Stegomyia aegypti (= Aedes aegypti) populations. Med Vet Entomol 30: 235-240. https://doi.org/10.1111/mve.12153
[2] Epelboin Y, Wang L, Gianetto QG, Choulet V, Gaborit P, Issaly J, Guidez A, Douche T, Chaze T, Matondo M, Dusfour I, 2021. CYP450 core involvement in multiple resistance strains of Aedes aegypti from French Guiana highlighted by proteomics, molecular and biochemical studies. PLoS ONE 16: e0243992. https://doi.org/10.1371/journal.pone.0243992
[3] Carvalho FD, Moreira LA, 2017. Why is Aedes aegypti Linnaeus so successful as a species? Neotrop Entomol 46: 243-255. https://doi.org/10.1007/s13744-017-0520-4
[4] Fauci AS, Morens DM, 2016. Zika virus in the Americas - Yet antother arbovirus threat. N Engl J Med 374:601-604. https://doi.org/10.1056/NEJMp1600297
[5] Jones RT, Ant, TH, Cameron MM, Logan JG, 2021. Phil Trans R Soc B 376: 20190802. https://doi.org/10.1098/rstb.2019.0802
[6] Benelli G, Mehlhorn H, 2016. Declining malaria, rising of dengue and Zika virus: insights for mosquito vector control. Parasitol Res 115: 1747-1754. https://doi.org/10.1007/s00436-016-4971-z
[7] World Health Organization 2017. Global vector control response 2017-2030. https://apps.who.int/iris/handle/10665/259002).
[8] Benelli G, Wilke ABB, Bloomquist J R, Desneux N, Beier JC, 2021. Overexposing mosquitoes to insecticides under global warming: A public health concern? Sci Total Environ 762:143069. https://doi.org/10.1016/j.scitotenv.2020.143069
[9] Epelboin Y, Chaney SC, Guidez A, Habchi-Hanriot N, Talaga S, Wang L, Dusfour I, 2018. Mem Inst Oswaldo Cruz 113: e170398. https://doi.org/10.1590/0074-02760170398
[10] Guidez A, Pocquet N, Restrepo J, Mathieu L, Gaborit P, Issaly J, Carinci R, Chandre F, Epelboin Y, Girod R, Dusfour I., 2020. Spatiotemporal multiple insecticide resistance in Aedes aegypti populations in French Guiana: Need for alternative vector control. Mem Inst Oswaldo Cruz 115:1-9. https://doi.org/10.1590/0074-02760200313
[11] de Thoisy B, Duron O, Epelboin L, Musset L, Quénel P, Roche B et al., 2021. Ecology, evolution, and epidemiology of zoonotic and vector-borne infectious diseases in French Guiana: Transdisciplinarity does matter to tackle new emerging threats. MEEGID 93:1049162021. https://doi.org/10.1016/j.meegid.2021.104916)
[12] Gerwick BC, Sparks TC, 2014. Natural products for pest control: An analysis of their role, value and future. Pest Manag Sci 70/1169-1185. https://doi.org/10.1002/ps.3744
[13] Pavela R, Maggi F, lannarelli R, Benelli G, 2019. Plant extracts for developing mosquito larvicides: From laboratory to the field, with insights on the modes of action. Acta Trop 193:236-271. https://doi.org/10.1016/j.actatropica.2019.01.019
[14] Isman MB, 2020. Botanical insecticides in the twenty-first century-fulfilling their promise?Ann Rev Entomol 65/233-249. https://doi.org/10.1146/annurev-ento-011019-025010
[15] Isman MB, Grieneisen ML, 2014. Botanical insecticide research: Many publications, limited useful data. Trends Plant Sci 19:140-145. https://doi.org/10.1016/j.tplants.2013.11.005
[16] Kanis LA, Prophiro JS, Da Silva Vieira E, Do Nascimento MP, Zepon KM, Kulkamp-Guerreiro IC, Da Silva OS, 2012. Larvicidal activity of Copaifera sp. (Leguminosae) oleoresin microcapsules against Aedes aegypti (Diptera: Culicidae) larvae. Parasitol Res 110:1173-1178. https://doi.org/10.1007/s00436-011-2610-2
[17] Pavela R, Pavoni L, Bonacucina G, Cespi M, Cappellacci L, Petrelli R et al., 2021.. Encapsulation of Carlina acaulis essential oil and carlina oxide to develop long - lasting mosquito larvicides: microemulsions versus nanoemulsions. J Pest Sci 94/899-915. https://doi.org/10.1007/s10340-020-01327-2
[18] Oliveira AEMFM, Duarte JL, Amado JRR, Cruz RAS, Rocha CF, Souto RNP et al., 2016. Development of α larvicidal nanoemulsion with Pterodon emarginatus Vogel oil. PLoSONE 11/1-16. https://doi.org/10.1371/journal.pone.0145835
[19] Rodrigues AABL, Martins RL, Rabelo EM, Tomazi R, Santos LL, Bandao LB, et al., 2021. Development of nano-emulsions based on Ayapana triplinervis essential oil for the control of Aedes aegypti larvae. PLoS ONE 16:1-23. https://doi.org/10.1371/journal.pone.0254225
[20] Pascual-Villalobos MJ, Guirao P, Diaz-Baños F, Canto-Tejero M, Villora G, 2019. Oil in water nanoemulsion formulations of botanical active substances. Nano-biopesticides Today and Future Perspectives, Academic Press ed., p.223-247. https://doi.org/10.1016/B978-0-12-815829-6.00009-7
[21] Tan S, Saad J, Wong L, Yap S, Lee K, 2013. A formulated solvent composition for pesticide. Patent WO 2013/054194 A1.
[22] Taranta C, Mansour P, Bourgogne M, Henriet M, 2002. Oil-in-water emulsion formulation of insecticides. Patent US-2005042245-A1.
[23] Falkowski et al. Propriétés insecticides d'un extrait de Sextonia rubra*,* et de ses constituants. Patent WO 2016/046489 A1
[24] Falkowski M, Jahn-Oyac A, Ferrero E, Issaly J, Eparvier V, Girod R et al., 2016. Assessment of a simple compound-saving method to study insecticidal activity of natural extracts and pure compounds against mosquito larvae. J Am Mosq Control Assoc 32:337-340. https://doi.org/10.2987/16-6613.1
[25] Falkowski M, Jahn-Oyac A, Odonne G, Flora C, Estevez Y, Touré S et al., 2020. Towards the optimization of botanical insecticides research: Aedes aegypti larvicidal natural products in French Guiana. Acta Trop 201:105179. https://doi.org/10.1016/j.actatropica.2019.105179
[26] Rodrigues A, Amusant N, Beauchene J, Eparvier V, Leménager N, Baudassé C, Espindola LS, Stien D, 2011. The termiticidal activity of Sextonia rubra (Mez) van der Werff (Lauraceae) extract and its active constituent rubrynolide. Pest Manag Sci 67:1420-1423. https://doi.org/10.1002/ps.2167
[27] Stien, D. EXTRACTS OF AMAZONIAN SUSTAINABLE WOODS, METHOD FOR OBTAINING SAME, AND USE THEREOF AS A BIOCIDAL AGENT. Patent WO 201 1/138570 A1

## Claims

1. A composition comprising an oil phase comprising :
a) a botanical extract;
b) one or more non-VOC bio-based solvents chosen from the group of esters of aliphatic monocarboxylic acids;
c) two or more bio-based non-ionic surfactants ; and
d) an anti-foaming agent.

2. A composition according to claim 1, comprising from 0.01 to 11% by weight, based on the total weight of the composition, of botanical extract.

3. A composition according to any of claims 1 or 2, wherein the botanical extract is a wood extract, in particular, a *Sextonia rubra* (Mez.) Van der Werff (Lauraceae) wood extract.

4. A composition according to any of the preceding claims, comprising from 15 to 30% by weight, based on the total weight of the composition, of esters of aliphatic monocarboxylic acids.

5. A composition according to any of the preceding claims, wherein the esters of aliphatic monocarboxylic acids are chosen from vegetable oils and transesterification products of such oils.

6. A composition according to any of the preceding claims, comprising from 55 to 85% by weight, based on the total weight of the composition, of bio-based non-ionic surfactants.

7. A composition according to any of the preceding claims, wherein the two or more bio-based non-ionic surfactants are chosen from alkylpolyglucosides and methyl ester alkoxylates.

8. A composition according to any of the preceding claims, wherein the emusifier system has a HLB value comprised between 8 and 20, with in particular one of the bio-based non-ionic surfactants having a HLB value comprised between 8 and 12 and one of the bio-based non-ionic surfactants having a HLB value comprised between 12 and 20.

9. A composition according to any of the preceding claims, wherein the botanical extract comprises rubrenolide and/or rubrynolide.

10. A composition according to any of the preceding claims, comprising from 2 to 4% by weight, based on the total weight of the composition, of anti-foaming agent.

11. An oil in water emulsion (EW) comprising a composition according to any of claims 1 to 10.

12. Use of a composition according to any of claims 1 to 10 or of an oil in water emulsion according to claim 11 as an insecticidal agent.

13. Use according to claim 12, wherein the insecticidal agent is a larvicidal agent.

14. Use according to any of claims 12 or 13, wherein the mosquito strain is selected from the Culicidae family.

15. Use according to claim 14, wherein the mosquito strain is of the genus *Aedes* and in particular from the species *Aedes aegypti.*
